(19)

Europäisches
Patentamt
European
Patent Office
Office européen
des brevets

(11) **EP 2 341 646 B1**

(12) **EUROPEAN PATENT SPECIFICATION**

(45) Date of publication and mention
of the grant of the patent:
**10.04.2013 Bulletin 2013/15**

(51) Int Cl.:
*H04B 17/00* $^{(2006.01)}$          *H04B 1/707* $^{(2011.01)}$
*H04J 11/00* $^{(2006.01)}$

(21) Application number: **09016068.0**

(22) Date of filing: **29.12.2009**

(54) **Method and system for predicting a location based orthogonality factor in a UMTS downlink**

Verfahren und System zum Vorhersagen eines ortsbasierten Orthogonalitätsfaktors in einer UMTS-Abwärtsstrecke

Procédé et système de prédiction d'un emplacement basé sur un facteur d'orthogonalité dans une liaison descendante UMTS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**06.07.2011 Bulletin 2011/27**

(73) Proprietor: **Deutsche Telekom AG
53113 Bonn (DE)**

(72) Inventors:
• **Beyer, Jürgen, Dr.
57250 Netphen (DE)**
• **Droste, Heinrich
64380 Rossdorf (DE)**

(74) Representative: **Lehmann, Judith Christina et al
Hössle Patentanwälte
Partnerschaft
Bolzstraße 3
70173 Stuttgart (DE)**

(56) References cited:
**WO-A1-2007/139459**

• **DROSTE H ET AL: "Distributions of orthogonality factor and multipath gain of the UMTS downlink obtained by measurement based simulations" 2005 IEEE 61ST VEHICULAR TECHNOLOGY CONFERENCE. VTC2005- SPRING (IEEE CAT. NO. 05CH37631) IEEE PISCATAWAY, NJ, USA,, vol. 1, 30 May 2005 (2005-05-30), pages 411-415, XP010855425 ISBN: 978-0-7803-8887-1**
• **BURGER S ET AL: "Location Dependent CDMA Orthogonality in System Level Simulations" 2005 IEEE 61ST VEHICULAR TECHNOLOGY CONFERENCE. VTC2005- SPRING (IEEE CAT. NO. 05CH37631) IEEE PISCATAWAY, NJ, USA,, vol. 1, 30 May 2005 (2005-05-30), pages 419-423, XP010855427 ISBN: 978-0-7803-8887-1**
• **DIRK STAEHLE ET AL: "A Model for Time-Efficient HSDPA Simulations" VEHICULAR TECHNOLOGY CONFERENCE, 2007. VTC-2007 FALL. 2007 IEEE 66TH, IEEE, PI, 1 September 2007 (2007-09-01), pages 819-823, XP031147518 ISBN: 978-1-4244-0263-2**

## Description

## Technical field

The present invention refers to multi-path dispersion, more particularly, to an orthogonality factor in UMTS downlinks.

## Background

Spreading codes used in UMTS (Universal Mobile Telecommunications System) are perfectly orthogonal only as long as they are not time shifted. Multi-path dispersion often leads to a loss of orthogonality between signals transmitted simultaneously on a UMTS downlink. Due to multiple path propagation simultaneously transmitted signals arrive at a respective receiver at different time instances leading to a loss of orthogonality of the respective spreading codes. This effect is modelled in UMTS radio network planning algorithms by a so-called orthogonality factor.

Since the loss of orthogonality leads to an increase of the intra-cell interference the orthogonality factor is generally applied in the equation to calculate the carrier-to-interference-plus-noise ratio. The lower the orthogonality factor, the larger is the intra-cell interference. That means that an orthogonality factor of 1 corresponds to no intra-cell interference and if the orthogonality factor is equal to 0 the intra-cell interference is fully considered. Values between 0.5 and 0.9 are commonly used for the orthogonality factor. A low orthogonality factor has a significant negative impact on the network capacity and coverage. Therefore, a complete and accurate characterization and prediction of the orthogonality factor is clearly essential in cell planning.

As long as only dedicated channels (DCHs) with data rates up to 384 kb/s are considered in UMTS radio network planning a location based prediction of the orthogonality factor is not such important since the dedicated channel coverage close to a site is generally given and the impact on the respective cell capacity is in the range of the prediction precision. However, this totally changes when a so-called High Speed Downlink Packet Access (HSDPA) is regarded which reaches peak data rates up to 14 Mb/s. High Speed Downlink Packet Access is a UMTS transmission mode according to which users in a cell are organized in time slots. That means, no individual transmission channel is given per user but spreading codes are primarily used to increase the amount of user data per time slot. The data rate which can be reached by HSDPA is much greater than the maximum data rate of around 3,4 Mb/s as predicted with a common average value of 0,75 for the orthogonality factor and assuming that the HSDPA cell resources are available for a single user. Higher data rates can only be predicted applying a location based orthogonality factor.

The multi-path profile of respective propagation channels mainly determines the orthogonality factor as described, for example, in document F. Adachi, "Effects of orthogonal spreading and Rake combining on DS-CDMA forward link in mobile radio", IEICE Trans. commun., vol. E80-B, No. 11, pp. 1703 to 1712, November 1997 and in document K. I. Pedersen, P. E. Mogensen, "The Downlink Orthogonality Factors Influence on WCDMA Systems Performance", IEEE Vehicular Technology Conf., Fall 2002, Vancouver. The other components of the channel models, like the time variance of the individual paths, play only a minor role. Thus, a suited way to predict a multi-path channel and, in consequence, the location based orthogonality factor is to apply a 3D propagation model as proposed, for example, in C. Passerini and G. Falciasecca, "Modelling of orthogonality factor using ray-tracing predictions", IEEE Trans. Wireless Commun., vol. 3, pp. 2051 to 2059, November 2004. However, this method is very time-consuming and, therefore, impractical for larger radio networks.

Regarding the practical aspects, it is desirable that the prediction of a location based orthogonality factor requires only input data which is generally available in macro cell propagation models. Based on a strong correlation between a delay spread and the orthogonality factor, an approach is presented in N. B. Mehta et. al, "Macrocell-Wide Behaviour of the Orthogonality Factor in WCDMA Downlinks", IEEE Trans. Wireless Commun., vol. 5, pp. 3394 to 3399, December 2006. However, in this document only the distance between NodeB (NodeB is a term used in UMTS to denote a base transceiver station) and a respective user equipment (UE) is implied. A similar model is suggested in the already mentioned document K. I. Pedersen, P. E. Mogen-sen, "The Downlink Orthogonality Factors Influence on WCDMA Systems Performance", IEEE Vehicular Technology Conf., Fall 2002, Vancouver.

The article "Location Dependent CDMA Orthogonality in System Level Simulations" by S. Burger, H. Buddendick and G. Wölfle describes that in system simulations of WCDMA radio networks a constant value for the orthogonality factor is assumed in the whole considered area of interest to determine the performance of WCDMA networks. This factor is used to scale the intra-cell-interference, which has an important impact on the network performance.

But, only distance depending models do not take into account the land usage which also has a large impact on the prediction of the orthogonality factor. For example, a user equipment in open area will experience other orthogonality factors as a user equipment in dense urban area.

**Summary of the Invention**

The invention refers to a method for predicting a location based orthogonality factor, according to clam 1.

It is desirable to provide a method for predicting the location based orthogonality factor by taking into account the land usage as well as the distance between a respective NodeB and the user equipment. In a former study of the inventors which is partly published in H. Droste and J. Beyer, "Distribution of orthogonality factor and multi-path gain of the UMTS downlink obtained by measurement based simulation", IEEE Vehicular Technology Conf., Spring 2005, Stockholm, channel sounder measurements are used to investigate the orthogonality factor. It is found that the orthogonality factor is correlated with a so-called excess path loss which is defined as a difference between a predicted or measured path loss and a free space path loss at the respective user equipment location. Thus, the excess path loss implies the effect of the radio path length as well as the impact of the land usage between NodeB and user equipment. However, with increasing excess path loss, the orthogonality factor decreases rapidly to very low values causing too pessimistic prediction of the HSDPA data rate in large parts of the radio network area.

The observed correlation between the orthogonality factor and the excess path loss serves as a basis of the present invention.

According to the present invention, a method for predicting a location based orthogonality factor in a UMTS downlink is proposed applying values which are derived from usual HSDPA and pilot level measurements. The method establishes a correlation between the orthogonality factor and the difference between a predicted path loss and a free space path loss which is designated as an excess path loss, and uses as input a measured channel quality indicator which is to be mapped to a ratio from carrier to interference power. Thereby, the channel quality indicator is measured independently of the excess path loss and the ratio from carrier to interference power is computed via a given equation relating the carrier to the interference power with the orthogonality factor.

The proposed invention basically contains two parts. First, it is stated, that the orthogonality factor depends on the excess path loss. Further, instead of channel sounder measurements commercial HSDPA measurements are used in order to get realistic values for the orthogonality factor from usual drive tests with a commercial measurement equipment. The proposed method considers a length of a respective radio path as well as a land usage between a respective NodeB and a respective user equipment. As will be shown in the following, the basic relation for the proposed method is derived from data as measured in simple drive tests usually carried out from mobile radio network operators. Furthermore, the proposed method only requires input values which are generally predicted from macro cell propagation models. Therefore, the proposed method is easy to implement in radio network planning tools. It will be shown that predicted HSDPA data rates agree well with the measured ones.

A so-called channel quality indicator (CQI) is a measurement of the communication quality of wireless channels. A channel quality indicator (CQI) can be a value or values representing a measure of channel quality for a given channel. Usually, the respective user equipment estimates an amount of data which can be transmitted in a next time slot, i.e. in a next transport block. The UMTS standard defines 30 different numbers of bits per transport block. A number of bits per transport block used as next is reported by the channel quality indicator which is ranged between 0 and 30. The carrier-to-interference power ratio is the ratio of power in a radio frequency carrier to the interference power in the respective channel.

According to a possible embodiment of the proposed method, the channel quality indicator is mapped to the ratio from carrier to interference power via a linear relation which fits a piecewise average of a measured relation of the same using a constant orthogonality factor. This linear relation is given by:

$$CQI = \left( \frac{1}{0,98} \right) \cdot \frac{C}{I}$$

wherein CQI is the channel quality indicator, C/I is the ratio from carrier to interference power and 0,75 is used as the constant orthogonality factor.

According to a further embodiment of the proposed method, the excess path loss is given by

$$L_{ex} = L_{meas} - L_{fs} \text{ (in dB)}$$

wherein $L_{ex}$ corresponds to the excess path loss, $L_{meas}$ corresponds to a measured path loss and $L_{fs}$ corresponds to a predicted free space path loss.

The proposed method to predict a location based orthogonality factor requires only a quite simple measurement system which is generally available at mobile network operators. The measurement system as proposed in the present invention consists of a PN (Pseudo Noise) scanner and a HSDPA card as network operators generally use for drive tests. A PN scanner is a pseudo noise scanner which measures a received pCPICH (primary Common Pilot Channel) from up to 8 cells per measurement point. The measurement is done in idle mode without any neighbourhood information. pCPICH stands for primary Common Pilot Channel and corresponds to a signal which is used for channel estimation and for a final time synchronisation of the respective user equipment. This signal is continuously transmitted. The user equipment further applies this signal to measure a signal strength from neighboured UMTS cells. From data reported by the used HSDPA card, the channel quality indicator, a cell identifier of a respective serving cell and a ratio of received pCPICH power to a total interference power in a corresponding UMTS frequency band can be taken. The last named ratio is abbreviated as $E_c/I_0$. Among others, the pseudo noise scanner measures the pCPICH with received power of up to 8 cells per measurement point which is used to calculate the ratio from carrier to interference power and the path loss. According to a further embodiment of the proposed method, the ratio from carrier to interference power (C/I) is computed according to the following formula:

$$\frac{C}{I} = \frac{P_{HS}}{(1-\alpha) \cdot P_{own} + P_{other} + P_{th}} \qquad\qquad (1)$$

with

| | |
|---|---|
| $P_{HS}$ | Received power to serve a HSDPA user. |
| $P_{own}$ | Total received power from the serving (=own) cell. |
| $P_{other}$ | Total received power from all other cells |
| $\alpha$ | Orthogonality factor |
| $P_{th}$ | Thermal noise power |

However, the only value reported from a measurement system describing the quality of a radio link is the channel quality indicator. Thus, the location based orthogonality factor should be based on the channel quality indicator. To include the channel quality indicator in the above-mentioned formula, a respective mapping of the channel quality indicator to the ratio from carrier to interference power (C/I), as already mentioned above, is required. In the following, it will be explained in detail how this linear equation as proposed above is obtained.

In order to determine the location based orthogonality factor, there have been carried out exemplarily specific measurements at a site (Cologne). Three measurements routes with large so-called "line of sight" paths were selected to find a maximum value of the orthogonality factor. Three further measurement areas were chosen in order to cover a wide range of urban land usage types. One in the city centre which has small streets and buildings with generally four levels. The others are located in two residential areas of different structure.

In order to compute C/I based on PN scanner data, it is assumed that only a single HSDPA user is active in the own cell and that the other cells have no traffic. That means, the own cell interference ($P_{own}$) is caused from the active HSDPA user and the power of all downlink common control channels and the other cell interference ($P_{other}$) is only caused by the received power of all downlink common control channels. Since all transmission powers are defined relative to the pCPICH transmission power, $C/I_{PN}$ purely based on PN measurement data is given by the following formula:

$$\frac{C}{I_{PN}} = \frac{E_c(j) \cdot \Delta_{HS\,rel}}{(1-\alpha) \cdot E_c(j) \cdot (1 + \Delta_{cch} + \Delta_{HS\,adj}) + (1 + \Delta_{cch}) \cdot \displaystyle\sum_{\substack{i=1 \\ i \neq j}}^{N_{PN}} E_c(i) + P_{th}} \qquad (2)$$

with

| | |
|---|---|
| $E_c$ | Received power of the pCPICH |
| $j$ | Index of the serving cell |
| $i$ | Index of the interfering cells |
| $\Delta_{HS\,rel}$ | The difference between HSDPA and pCPICH transmission power. |
| $\Delta_{HS\,adj}$ | As $\Delta_{HS\,rel,}$ but including power adjustment |
| $\Delta_{cch}$ | The difference between the summed up power of all downlink common control channels and the pCPICH |

transmission power.

A UMTS network with traffic as low as assumed above within the complete measurement time is not realistic. Therefore, additional interference due to additional traffic has to be taken into account. For that purpose, similar to $C/I_{PN}$ $E_c/I_{0,PN}$ is computed based on PN scanner data and compared with $E_c/I_{0,HS}$ measured from the respective HSDPA card. If $E_c/I_{0,PN} > E_c/I_{0,HS}$, the difference of both is shared proportionally between $P_{own}$ and $P_{other}$ and C/I is finally calculated with a mixture of equations (1) and (2).

The location based orthogonality factor is not known so far and, therefore, a constant orthogonality factor of 0,75 is used to derive the mapping of C/I to CQI. In order to derive a functional description for a mapping C/I to CQI, the C/I values within certain CQI intervals are averaged which leads to a piecewise average. This is individually done for all measurement routes since the characteristic of the various environments should be kept. Therefrom, a linear relation which sufficiently fits the piecewise average of measured C/I to CQI relation can be derived which is given by:

$$CQI = 18 + \frac{1}{0.98} \cdot \frac{C}{I} \quad (\text{in dB}) \qquad (3)$$

As already mentioned above, it has been found that a correlation exists between the orthogonality factor and a respective excess path loss, the excess path loss being given by $L_{ex} = L_{meas} - L_{fs}$. Investigations made up to now were based on channel sounder measurements. However, according to these former investigations, the orthogonality factor decreases rapidly with increasing excess path loss and becomes very low. In consequence, for a quite high excess path loss, the predicted HSDPA data rate is very low in large parts of the respective network area which is not confirmed by real HSDPA measurements. Therefore, the location based orthogonality factor should be derived based on HSDPA measurements as proposed by the present invention. The only value reported from the respective user equipment which is suited for this purpose is, as already mentioned, the channel quality identifier (CQI) and, therefore, the already described mapping of CQI to C/I according to equation (3) in combination with equation (1) represents the basis for the prediction of the location based orthogonality factor. In the following, it is described how a relation between the CQI and the excess path loss which is required can be derived.

At least, two effects lead to decrease the channel quality identifier, namely, an increasing excess path loss and an increasing of other cell interference. The latter has to be excluded in order to determine the orthogonality factor. Only those channel quality identifiers with other cell interference below an own cell interference are considered in the following. This threshold is expressed in terms of $E_C/I_0$ measured by the used HSDPA card. That means that in order to exclude any effect of too high other cell interference, it is assumed that $P_{own} \geq P_{other} + P_{th}$. This request results in $E_C/I_0 > -9, 5$ dB assuming a power setting of the considered network. That means, in order to exclude any effect of too high other cell interference, only those channel quality identifiers are considered which have an $E_C/I_0$ better than -9,5 dB. Then the measured CQI can be plotted versus respective measured excess path losses. This can be done, for example, for a single measurement route in a residential area of a considered network, as for example, of Cologne. Those channel quality identifiers having $E_C/I_0 < -9,5$ dB due to high other cell interference are not further considered.

Since no suited polynomial relation can be found to describe a dependency of the channel quality identifier with the excess path loss, a piecewise average is used again. The channel quality identifier can be averaged, for example, within 5dB intervals of the respective excess path loss. Such a piecewise average is calculated for all measurement routes in the respective network. A tendency of decreasing CQI with increasing $L_{ex}$ clearly exists for all measurement routes. Therefrom, an over-all CQI to $L_{ex}$ relation can be derived taking into account properties and characteristics of the individual measurement routes. This derived over-all CQI to $L_{ex}$ relation $CQI(L_{ex})$ is one of the main inputs for the prediction of the location based orthogonality factor.

Inserting the mapping relation of the channel quality identifier to C/I in the formula given by equation (1) results after some reforming in the following formula:

$$\alpha = 1 - \frac{P_{HS}}{P_{own}} \cdot 10^{-(0.1 \cdot (CQI(L_{ex}) - 18) \cdot 0.98)} + \frac{P_{other} + P_{th}}{P_{own}} \qquad (4)$$

Since the relation $CQI(L_{ex})$ is an average and general relation without any dependency of the received powers, $P_{HS}$, $P_{own}$ and $P_{other}$ are not known. Therefore, $P_{HS}$ and $P_{own}$ can be defined relatively to a received pCPICH power. For $P_{other}$ it is assumed that it increases exponentially with $L_{ex}$ which can be formulated as follows:

$$P_{other} = E_c \cdot (10^{(0.1 \cdot n \cdot L_{ex})} - 1) \qquad\qquad (5)$$

The slope n of $P_{other}$ is adjusted such that the maximum value is reached for $L_{ex}$=50dB. Inserting (5) in (4) gives

$$\alpha = 1 - \frac{\Delta_{HSrel}}{1 + \Delta_{HSrel} + \Delta_{cch}} \cdot 10^{-(0.1(CQI(L_{ex})-18) \cdot 0.98)} + \frac{10^{(0.1 \cdot n \cdot L_{ex})} - 1}{1 + \Delta_{HSrel} + \Delta_{cch}} \qquad (6)$$

$L_{ex}$ is the only variable in (6) because $CQI(L_{ex})$ also only depends on $L_{ex}$ and all other terms are constants.

According to the last equation, the location based orthogonality factor depends on an average relation of CQI to $L_{ex}$ and several further simplifying assumptions. Therefore, this relation has to be adapted to get a better agreement of reported CQI and those CQI which are computed based on PN scanner measurement data. The orthogonality factor to $L_{ex}$ relation can be modified in order to increase the agreement of the 10% (low CQIs) and 95% (high CQIs) percentile of the distributions from the measured and the predicted CQI values. Now, measurement points with $E_C/I_0 < $ - 9,5 dB are also considered. It is found that the orthogonality factor has to be slightly increased and the minimum value is set to 0,72. This minimum value is well beyond the minimum of 0,45 and 0,2 as found in document N. B. Mehta et al, "Macrocell-Wide Behaviour of the Orthogonality Factor in WCDMA Downlinks", IEEE Trans. Wireless Commun., vol. 5, pp. 3394 to 3399, December 2006 and in document K. I. Pedersen, P. E. Mogensen, "The Downlink Orthogonality Factors Influence on WCDMA Systems Performance", IEEE Vehicular Technology Conf., Fall 2002, Vancouver, but corresponds with another CQI based orthogonality factor estimation described in L. Klockar et. Al "Channel Characterisation and HSDPA Bit Rate Prediction of a Dence City Network", IEEE Vehicular Technology Conf., Spring 2009, Barcelona.

However, a further tuning is required for radio network planning purposes. Even if it is assumed that there are best conditions, namely, that the access path loss $L_{ex}$ corresponds to 0dB which means that they are no other interferences, the maximum data rate reached without the orthogonality factor after the previous adaption is 4,3 Mb/s. This is much lower than the highest data rate of around 6,5 Mb/s obtained from the reported CQIs. The main reason for this mismatch is that PN scanner data could not be reliably averaged for this investigation, but the respective measurement system reports averaged CQIs and the power assumptions required for equation (2) are also averages. This becomes the more critical the higher the CQI is. Thus, a second fine tuning step effects only the upper CQI range. The second fine tuning step is carried out similar to the first one, but now the distributions of the measured $CQI_{HS}$ and $CQI_{pred}$ predicted along the measurement routes are compared. The relation of the orthogonality factor to the excess path loss is adapted such that the higher CQIs agree sufficiently.

The proposed method for the prediction of the location based orthogonality factor can be implemented, for example, in the known radio network planning tool PegaPlan® and, finally, it has to be verified if the location based orthogonality factor improves the prediction of the HSDPA data rate. In order to be close to a planner's daily work, PegaPlan's macro model is used taking into account additionally street vector data which is absolutely necessary for a verification along measurement routes in streets.

Since data rate limitations of NodeB, user equipment or the respective core network but also of the respective scheduler might affect the HSDPA data rate measured at an air interface reported channel quality identifiers are used to provide the respective HSDPA data rate assuming 15 spreading codes, a re-transmission rate of 10 % and a specific used equipment type (category 10). Thus, this measured HSDPA data rate depends only on the respective radio link quality. This is also shown in reference L. Klockar et. al. "Channel Characterisation and HSDPA Bit Rate Prediction of a Dence City Network", IEEE Vehicular Technology Conf., Spring 2009, Barcelona. Moreover, the achievable data rate at a user's location is regarded generally assuming that the HSDPA cell resources are completely available for a single user.

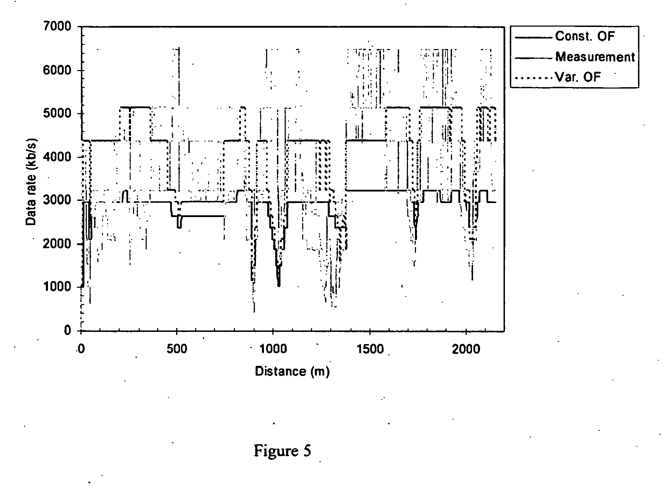

Exemplarily, it has been started with a detail look to a specific measurement route. It is a long, straight street of around 50m width (measured from building to building) where the NodeBs are located on high buildings directly at the street and line of sight (LOS) is given along the complete measurement route. Hence, this street is well suited to demonstrate the impact of the location based orhogonality factor on the predictions. The measured and predicted HSDPA data rate along this measurement route is shown in Figure 5. According to Figure 5, the data rate predicted with a constant orthogonality factor is much too low. Applying the location based orthogonality factor leads to a much better agreement with the measured HSDPA data rate, but the prediction still does not reach the highest measured data rate of 6,6 Mb/s. A reason for this is that the measured data rate is based on the reported channel quality identifier. Thus, the high data rates are peak values which should not be predicted by a planning tool.

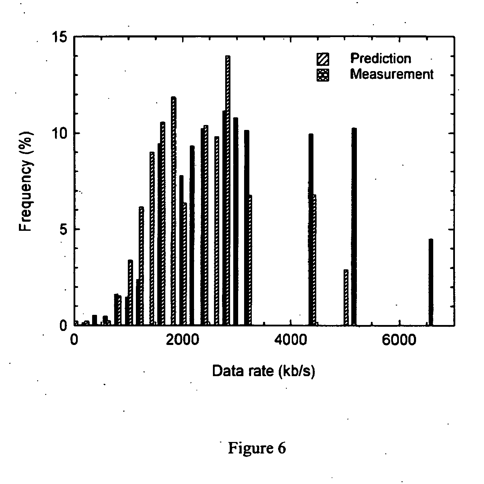

The distribution of the measured and predicted HSDPA data rate along all measurement routes in Cologne which was taken as an example is given in Figure 6. Assuming no other cell interference, the maximum predicted data rate achieved with a constant orthogonality factor of 0,75 is 3,4 Mb/s. Applying now the proposed method for predicting the location based orthogonality factor, the predicted data rate exceeds 3,4 Mb/s. For reason previously discussed, the higher data rates are not as often predicted as measured and the maximum measured data rate is never predicted. However, due to the location based orthogonality factor around 9% of the measurement points have a predicted data rate greater than 3,4 Mb/s.

It has to be stated that in particular with respect to HSDPA a downlink orthogonality factor is an important parameter affecting coverage as well as capacity in the UMTS radio network planning. With a constant orthogonality factor of 0,75 the maximum predicted data rate is 3,4 Mb/s which is much below the expected high HSDPA data rates. To predict higher data rates requires a spatially prediction of the orthogonality factor as proposed by the provided method.

Based on commercial HSDPA measurements, the proposed method for the prediction of the location based orthogonality factor is derived. The proposed method is based on the difference between the free space path loss and the predicted path loss. This approach implies the radio path length as well as a land usage between NodeB and user equipment. It was found that the maximum value for the orthogonality factor is 0,86 and the minimum is 0,72. The method to predict the location based orthogonality factor requires a precise C/I to CQI mapping which was explained in detail before.

The proposed method can be implemented in the known radio network planning tool PegaPlan®. The HSDPA data rates are predicted with a macro cell model which, in addition, takes street vector data into account. The location based orthogonality factor improves a prediction of the HSDPA data rate. Higher data rates as observed from the measurements are also predicted. Even along line of sight (LOS) routes the predicted and measured data rate agree well.

Finally, it has to be mentioned that a measurement in a hilly area shows a significantly different CQI to C/I relation and a much lower orthogonality factor. This is likely caused by more propagation paths with longer delays as generally known for hilly terrain. This indicates that in addition the terrain has to be taken into account to predict the location based orthogonality factor. Anyway, the proposed method to get a relation for the location based orthogonality factor can be used for other terrain classes and even in hilly terrain the basic dependency of the orthogonality factor is obtained as presented before.

According to a further embodiment of the proposed invention, a measurement system used for predicting a location based orthogonality factor in a UMTS downlink from HSDPA measurements is proposed. The measurement system comprises a PN scanner and a HSDPA card as used by a network operator for drive tests. Thereby, the PN scanner and the HSDPA card are suitable to run simultaneously. The PN scanner is further configured to measure pCPICH received power of up to 8 cells per measurement point which can be used to calculate the ratio from carrier to interference power and the excess path loss. The HSDPA card is configured to report data from which the channel quality indicator, a cell identifier of a respective serving cell and a ratio of received pCPICH power to a total interference power in a corresponding UMTS frequency band can be taken.

Moreover, a computer program with a program code is proposed with the help of which all steps of the proposed method can be performed when the computer program is running on a computer or a corresponding calculating unit. Furthermore, a computer program with a computer readable medium and a computer program stored at the computer readable medium having a program code suitable for executing all steps of the proposed method is covered by the present invention.

The details of one or more implementations are set forth in the accompanying drawings and the description below. Other features will be apparent from the description and drawings, and from the claims.

**Brief description of the drawings**

Figure 1 shows a plot showing a ratio from a carrier to interference power (C/I) calculated based on PN scanner measurement data versus a channel quality indicator (CQI) measured with a respective HSDPA card for a single measure-. ment route in the city centre of Cologne.

Figure 2 shows a plot showing CQI values versus excess path loss ($L_{ex}$) values of a single measurement route in Cologne.

Figure 3 shows a piecewise average of the CQI values within consecutive 5dB intervals of the excess path loss ($L_{ex}$) for the single measurement route which is also used in Figure 2.

Figure 4 shows a schematic plot of a relation of an orthogonality factor $\alpha$ and the excess path loss $L_{ex}$ before and after respective fine tuning steps.

Figure 5 shows HSDPA data rate in a wide straight street in Cologne with high probability for line of sight (LOS) and a corresponding planning tool prediction. The data is plotted versus a driven distance of the respective measurement route.

Figure 6 shows a frequency of occurrence of HSDPA data rate from all measurement routes in Cologne and a corresponding prediction with a macro cell model.

Figures 7 and 8 show respective flowcharts describing possible embodiments of the proposed method according to the invention.

**Detailed description of the drawings**

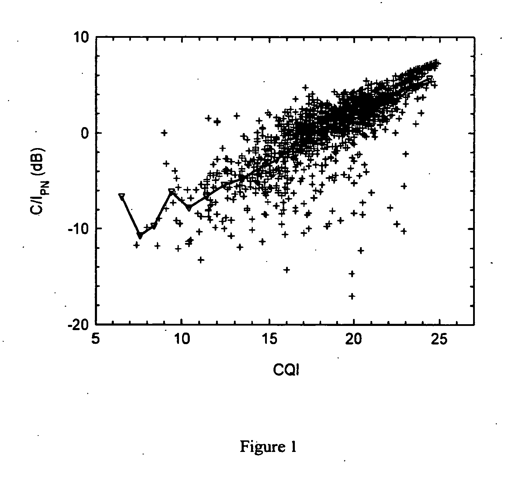

Figure 1 shows a scatter plot of a ratio from the carrier to interference power (C/I) versus a channel quality identifier (CQI). The values for the C/I are calculated based on PN scanner measurement data and the CQI values are measured with a HSDPA card for a single measurement route in the city centre of Cologne which is given here as a possible example for performing the proposed method for predicting an orthogonality factor. By means of this scatter plot a mapping of C/I to CQI is to be derived which is then used to establish finally a relation between a respective orthogonality factor which is to be predicted and an excess path loss ($L_{ex}$). In order to derive a functional description for this required mapping, the C/I values within certain CQI intervals are averaged which leads to a piecewise average drawn as shown as a solid line with markers graph in Figure 1. This is individually done for all measurement routes since the characteristic of the various environments should be kept. Therefrom, it is found that a linear relation sufficiently fits the piecewise average of the measured C/I to CQI relation which can be given, as already mentioned before by

$$CQI = 18 + \frac{1}{0.98} \cdot \frac{C}{I} \quad \text{(in dB)}$$

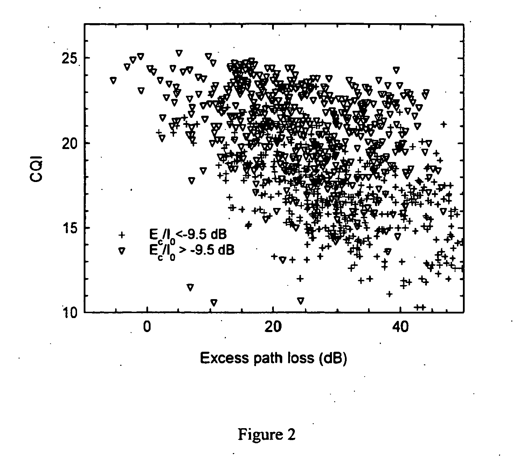

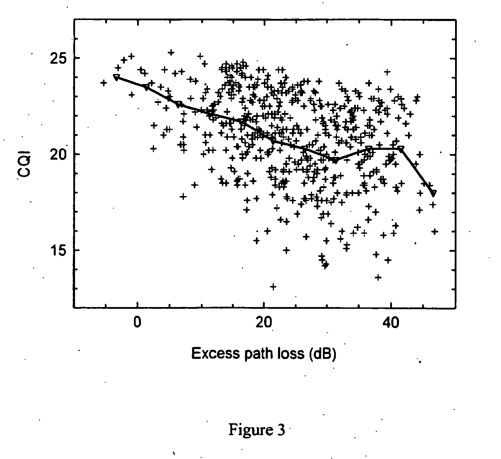

Figure 2 shows a scatter plot showing a correlation between the CQI and an excess path loss ($L_{ex}$) for a single measurement route in a residential area of Cologne. It can be seen that at least two effects lead to decrease the CQI, namely, increasing $L_{ex}$ and increasing other cell interference. The latter has to be excluded in order to determine the orthogonality factor. Only those CQI with other cell interference below the own cell interference are considered in the present investigation. This threshold is expressed in terms of $E_C/I_0$ measured by the respective HSDPA card. That means, in order to exclude any effect of too high other cell interference, only those CQI are considered which have an $E_C/I_0$ better than -9,5 dB. Figure 2 indicates those points with $E_C/I_0 < $ -9,5 dB with a cross and those points with $E_C/I_0 > $ -9,5 dB with a triangle. Those CQI having $E_C/I_0 < $ -9,5 dB due to high other cell interference are not further considered. For the other CQI values a piecewise average of the CQI values within consecutive 5dB intervals of $L_{ex}$ for the single measurement route is determined as shown in Figure 3. The result of this procedure as shown in Figure 3 confirms the above-mentioned correlation between CQI and $L_{ex}$. Such a piecewise average is calculated for all measurement routes in Cologne. The average CQI of the different measurement routes varies within a band of 4 CQI, but the tendency of decreasing CQI with increasing $L_{ex}$ clearly exists for all measurement routes. Therefrom, an over-all CQI to $L_{ex}$ relation can be derived taking into account the properties and characteristics of the individual measurement routes. This derived over-all CQI to $L_{ex}$ relation CQI ($L_{ex}$) is one of the main inputs for the location based orthogonality factor prediction.

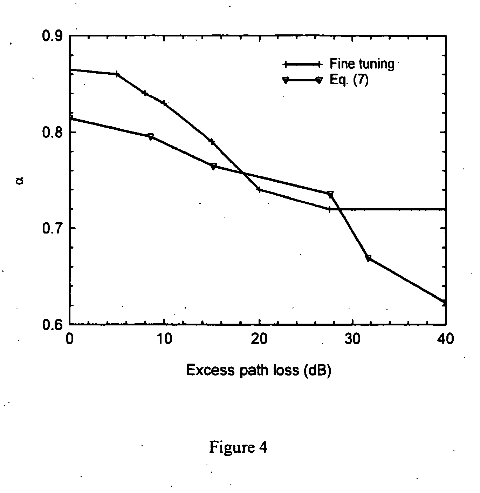

Figure 4 shows the relation of the orthogonality factor as indicated by $\alpha$ and the excess path loss $L_{ex}$ according to the above-described equation (6) (black line with triangle markers) and after two fine tuning steps (grey line with plus markers) which have already been described before. According to the above-mentioned equation (6), the location based orthogonality factor $\alpha$ depends on an average relation CQI to $L_{ex}$ and several further simplifying assumptions. Therefore, this relation has to be adapted to get a better agreement of reported CQI and those CQI which are computed based on PN scanner measurement data. Therefore, the orthogonality factor to $L_{ex}$ relation is to be modified in order to increase the agreement of the low CQIs and high CQIs percentile of the distributions from the measured and the predicted CQI values. Unlike to Figures 1 to 3, now measurement points with $E_C/I_0 < $ -9,5 dB are also considered. It is found that the orthogonality factor has to be slightly increased and the minimum value is set to 0,72. This adaption is indicated by the plot formed by the plus markers.

A further tuning is required since the maximum data rate reached with the orthogonality factor after the previous adaptation is only 4,3 Mb/s. This is much lower than the highest data rate of around 6,5 Mb/s obtained from reported CQIs. The main reason for this mismatch is that PN scanner data could not be reliably averaged for the respective investigation but the measurement system reports CQIs and the power assumptions required for equation (2) are also averages. This becomes the more critical the higher the CQI value is. Thus, the second fine tuning step affects only the upper CQI range. The second fine tuning step is carried out similar to the first one, but now the distributions of the measured CQIs and the predicted CQIs with PegaPlan® along the measurement routes are compared. The relation of the orthogonality factor to the excess path loss is adapted such that the higher CQIs agree sufficiently. The result of both fine tuning steps is the graph in Figure 4 formed by the rectangular markers.

Figure 5 shows HSDPA data rate in a wide straight street in Cologne with high probability for line of sight (LOS) and corresponding planning tool prediction. The data is plotted versus a respective driven distance of the measurement route. No data is available at larger parts with straight lines, e. g. 2.500m. The smaller black line shows the measured data rate, the wider solid grey line graph shows the prediction with the location based orthogonality factor and the dashed graph shows the prediction with a constant orthogonality factor of 0,75. According to Figure 5, the data rate predicted with a constant orthogonality factor is much too low. Applying the location based orthogonality factor as determined according to the proposed method leads to a much better agreement with the measured HSDPA data rate. However, the prediction still does not reach the highest measured data rate of 6,6 Mb/s. The reason is that the measured data rate is based on the reported CQI value. Thus, the high data rates are peak values which should not be predicted by a planning tool.

The distribution of the measured (grey patterned bars) and the predicted (black hatched bars) HSDPA data rate along all measurement routes in Cologne is given in Figure 6. Assuming no other cell interference, the maximum predicted data rate achieved with a constant orthogonality factor of 0,75 is 3,4 Mb/s. Applying the location based orthogonality factor as determined according to the proposed method, the predicted data rate exceeds 3,4 Mb/s. For reason previously discussed, the higher data rates are not as often predicted as measured and the maximum measured data rate is never predicted. However, due to the location based orthogonality factor around 9 % of the measured points have a predicted data rate greater than 3,4 Mb/s.

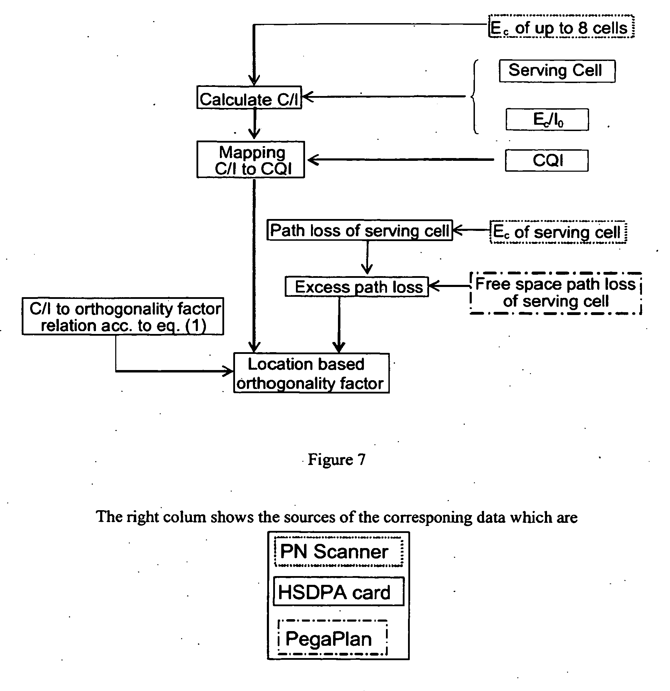

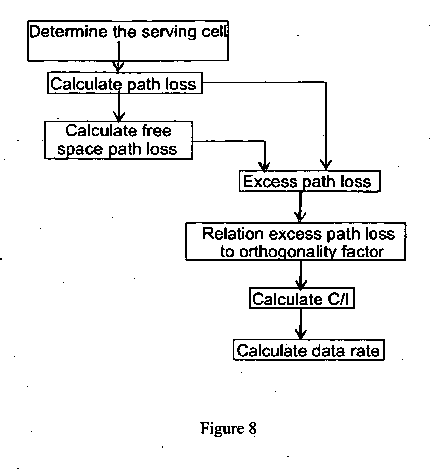

Figure 7 and Figure 8 show flowcharts describing the succession of operation steps as provided by an embodiment of the proposed method. Figure 7 shows an embodiment of the proposed method to determine a location based orthogonality factor which requires only a quite simple measurement system which consists generally of a PN (Pseudo Noise) scanner and a HSDPA card as network operators generally use for drive tests.

In a first step, a pre-given general equation to compute C/I is provided, the equation being as follows:

$$\frac{C}{I} = \frac{P_{HS}}{(1-\alpha) \cdot P_{own} + P_{other} + P_{th}} \qquad (1)$$

with

$P_{HS}$    Received power to serve a HSDPA user.
$P_{own}$    Total received power from the serving (=own) cell.
$P_{other}$    Total received power from all other cells
$\alpha$    Orthogonality factor
$P_{th}$    Thermal noise power

As input for the C/I calculation serve a received pilot level ($E_c$) from PN scanner data and a respective serving cell from the HSDPA card. At this step of the procedure a constant orthogonality factor of 0.75 is assumed.

The only value reported from a measurement system describing the quality of a radio link is the channel quality indicator CQI. Thus, a location based orthogonality factor $\alpha$ should be based on the channel quality indicator CQI. To include the channel quality indicator CQI in the pre-given general equation (1), a respective mapping of CQI to C/I is required. Since the location based orthogonality factor $\alpha$ is not known so far, a constant orthogonality factor of 0,75 is used to derive the mapping of C/I to CQI. In order to derive a functional description for a mapping C/I to CQI, the C/I values within certain CQI intervals are averaged which leads to a piecewise average. This can be done for all measurement routes, since the characteristic of various environments should be kept.

Furthermore, it has been found that a correlation exists between the orthogonality factor $\alpha$ and a respective excess path loss $L_{ex}$, the excess path loss $L_{ex}$ being given by $L_{ex} = L_{meas} - L_{fs}$. As already mentioned before, the only value reported from a respective user equipment which is suited for predicting a location based orthogonality factor $\alpha$ is the channel quality identifier CQI and, therefore, the already described mapping of C/I to CQI in combination with equation (1) represents a basis for a prediction of the location based orthogonality factor $\alpha$. A relation between the CQI and an excess path loss $L_{ex}$ is further required which can be determined based on measured CQI data and measured $L_{ex}$ data. After that, the mapping relation CQI to C/I is inserted in the formula given by equation (1) by using CQI = CQI ($L_{ex}$) so that an orthogonality factor $\alpha$ to $L_{ex}$ relation $\alpha$ ($L_{ex}$) can be derived therefrom.

This relation "excess path loss to orthogonality factor" is the main input to predict the C/I with the proposed method. The steps required for a prediction in a radio planning tool are shown in Figure 8. For each pixel the respective serving cell is determined and the path loss from a respective serving base station to the pixel is predicted. In addition, the respective free space path loss is calculated too. The difference from both gives the excess path loss ($L_{ex}$). Based on the relation "excess path loss to orthogonality factor" - as derived from the above described procedure - for the given excess path loss the orthogonality factor at the regarded pixel is determined. Finally, applying the orthogonality factor the respective C/I is calculated which can further be used to predict the respective HSDPA data rate.

**Claims**

1. A method for predicting a location based orthogonality factor, the orthogonality factor representing a loss of orthogonality of spreading codes transmitted simultaneously on a UMTS downlink, the method applying a difference between a predicted path loss and a free space path loss for a distance between a base transceiver station and a user equipment, establishing a correlation between that difference, designated as excess path loss, and the orthogonality factor **characterized in that** the method uses for predicting the orthogonality factor input values which are derived from simultaneous HSDPA and pilot signal measurements and a mapping from a reported channel quality indicator to a ratio from carrier to interference power, wherein the ratio from carrier to interference power is computed according to the following formula:

$$\frac{C}{I} = \frac{P_{HS}}{(1-\alpha)P_{own} + P_{other} + P_{th}}$$

wherein $P_{HS}$ is the received power to serve a respective HSDPA user, $P_{own}$ is the total received power from a respective serving cell, $P_{other}$, is a total received power from all other cells, $P_{th}$ is the thermal noise power and $\alpha$ is the orthogonality factor; and the orthogonality factor is computed by the formula:

$$\alpha = 1 - \frac{P_{HS}}{P_{own}} 10^{-(0.1(CQI(L_{Ex})-18)0.98)} + \frac{P_{other} + P_{th}}{P_{own}}$$

wherein an over-all channel quality indicator CQI to an excess path loss $L_{EX}$ relation $CQI(L_{EX})$ is derived from appropriate measurements of the channel quality indicator in dependency of the excess path loss taking into account properties and characteristics of individual measurement routes and the channel quality indicator is mapped to the ratio from carrier to interference power via a linear relation which fits a piecewise average of a measured relation of the same using a constant orthogonality factor.

2. The method according to any one of claims 1 wherein the excess path loss is given by

$$L_{ex} = L_{rp} - L_{fs} \text{ in dB}$$

wherein $L_{ex}$ corresponds to the excess path loss, $L_{rp}$ corresponds to the predicted path loss of a radio path and $L_{fs}$ corresponds to the free space path loss.

3. The method according to any one of the preceding claims, wherein the channel quality indicator is measured at a respective HSDPA user.

4. The method according to any one of the preceding claims wherein, in order to exclude any effect of too high other cell interference, it is assumed that $P_{own} \geq P_{other} + P_{th}$.

5. The method according to any one of the preceding claims wherein $P_{HS}$ and $P_{own}$ are defined relatively to a received power $E_c$ of a primary common pilot channel pCPICH and $P_{other}$ is given as $E_C(10^{(0.1nL_{EX})}-1)$ with n being the slope of $P_{other}$.

6. The method according to claim 5 wherein further fine tuning is performed by adapting lower and upper quantiles of a predicted CQI distribution to those of the measured CQI distribution.

7. A measurement system adapted to predict a location based orthogonality factor in an UMTS downlink from HSDPA measurements according to any one of claims 1 to 6, the system comprising a PN scanner and a HSDPA card as used by a network operator for drive tests, the PN scanner and the HSDPA card being suitable to run simultaneously, and the PN scanner being further configured to measure pCPICH received power of up to 8 cells per measurement point which can be used to calculate the ratio from carrier to interference power and the path loss, and the HSDPA card being configured to report data from which the channel quality indicator, a cell identifier of a respective serving cell and a ratio $E_c/I_0$ of received pCPICH power to a total interference power in a corresponding UMTS frequency band can be taken.

8. A computer program having program code means, with the help of which all steps of a method according to one of claims 1 to 6 can be performed when the computer program is run on a computer or a corresponding calculating unit, in particular using a system according to claim 7.

9. A computer program with a computer readable medium and a computer program stored at the computer readable medium having program code means suitable for executing all steps of a method according to one of claims 1 to 6, when the computer program is run on a computer or a corresponding calculating unit, in particular using a system according to claim 7.

**Patentansprüche**

1. Verfahren zum Vorhersagen eines ortsbasierten Orthogonalitätsfaktors, wobei der Orthogonalitätsfaktor einen Orthogonalitätsverlust von gleichzeitig auf einer UMTS-Abwärtsstrecke übertragenen Spreizcodes darstellt, wobei das Verfahren eine Differenz zwischen einem vorhergesagten Wegverlust und einem Freiraum-Wegverlust für einen Abstand zwischen einer Basistransceiverstation und einem Benutzergerät anwendet und eine Korrelation zwischen dieser als Überschuss-Wegverlust bezeichneten Differenz und dem Orthogonalitätsfaktor herstellt, **dadurch gekennzeichnet, dass** das Verfahren zum Vorhersagen des Orthogonalitätsfaktors Eingangswerte, die von gleichzeitigen HSDPA- und Pilotsignalmessungen abgeleitet werden, und eine Abbildung von einem mitgeteilten Kanalqualitätsindikator auf ein Verhältnis der Träger-zu-Interferenzleistung verwendet, wobei das Verhältnis der Träger-zu-Interferenzleistung nach der folgenden Formel berechnet wird:

$$\frac{C}{I} = \frac{P_{HS}}{(1-\alpha)P_{own} + P_{other} + P_{th}}$$

wobei $P_{HS}$ die empfangene Leistung zum Bedienen eines jeweiligen HSDPA-Benutzers ist, $P_{own}$ die gesamte empfangene Leistung von einer jeweiligen bedienenden Zelle ist, $P_{other}$ die gesamte empfangene Leistung von allen anderen Zellen ist, $P_{th}$ die thermische Rauschleistung ist und $\alpha$ der Orthogonalitätsfaktor ist und der Orthogonalitätsfaktor nach der folgenden Formel berechnet wird:

$$\alpha = 1 - \frac{P_{HS}}{P_{own}} 10^{-(0,1(CQI(L_{EX})-18)0,98)} + \frac{P_{other} + P_{th}}{P_{own}}$$

wobei eine Gesamt-Kanalqualitätsindikator-CQI-zu-Überschuss-Wegverlust-$L_{EX}$-Beziehung CQI ($L_{EX}$) anhand geeigneter Messungen des Kanalqualitätsindikators in Abhängigkeit von dem Überschuss-Wegverlust unter Berücksichtigung von Eigenschaften und Merkmalen individueller Messrouten abgeleitet wird und der Kanalqualitätsindikator über eine lineare Beziehung, die unter Verwendung eines konstanten Orthogonalitätsfaktors an einen stückweisen Durchschnitt einer gemessenen Beziehung davon angepasst wird, auf das Verhältnis der Träger-zu-Interferenzleistung abgebildet wird.

**2.** Verfahren nach Anspruch 1, wobei der Überschuss-Wegverlust durch

$$L_{ex} = L_{rp} - L_{fs} \text{ in dB}$$

gegeben ist, wobei $L_{ex}$ dem Überschuss-Wegverlust entspricht, $L_{rp}$ dem vorhergesagten Wegverlust eines Funkwegs entspricht und $L_{fs}$ dem Freiraum-Wegverlust entspricht.

**3.** Verfahren nach einem der voranstehenden Ansprüche, wobei der Kanalqualitätsindikator an einem jeweiligen HSDPA-Benutzer gemessen wird.

**4.** Verfahren nach einem der voranstehenden Ansprüche, wobei zum Ausschließen eines Effekts einer zu hohen Interferenz einer anderen Zelle angenommen wird, dass $P_{own} \geq P_{other} + P_{th}$ gilt.

**5.** Verfahren nach einem der voranstehenden Ansprüche, wobei $P_{HS}$ und $P_{own}$ in Bezug auf eine empfangene Leistung $E_c$ eines primären gemeinsamen Pilotkanals pCPICH definiert sind und $P_{other}$ als $E_C(10^{(0,1nL_{EX})}-1)$ gegeben ist, wobei n die Steigung von $P_{other}$ ist.

**6.** Verfahren nach Anspruch 5, wobei des Weiteren eine Feinabstimmung durch Anpassen unterer und oberer Quantilen einer vorhergesagten CQI-Verteilung an jene der gemessenen CQI-Verteilung ausgeführt wird.

**7.** Messsystem, das dafür eingerichtet ist, einen ortsbasierten Orthogonalitätsfaktor in einer UMTS-Abwärtsstrecke anhand HSDPA-Messungen nach einem der Ansprüche 1 bis 6 vorherzusagen, wobei das System einen PN-Scanner und eine HSDPA-Karte aufweist, wie sie von einem Netzbetreiber für Fahrttests verwendet werden, wobei der PN-Scanner und die HSDPA-Karte dafür geeignet sind, gleichzeitig zu laufen, und der PN-Scanner ferner konfiguriert ist, um empfangene pCPICH-Leistung von bis zu 8 Zellen je Messpunkt zu messen, welche verwendet werden kann, um das Verhältnis der Träger-zu-Interferenzleistung und den Wegverlust zu berechnen, und die HSDPA-Karte dafür konfiguriert ist, Daten mitzuteilen, anhand derer der Kanalqualitätsindikator, eine Zellenkennung einer jeweiligen bedienenden Zelle und ein Verhältnis $E_c/I_0$ der empfangenen pCPICH-Leistung zu einer Gesamt-Interferenzleistung in einem entsprechenden UMTS-Frequenzband gewonnen werden können.

**8.** Computerprogramm mit Programmcodemitteln, mit deren Hilfe alle Schritte eines Verfahrens nach einem der Ansprüche 1 bis 6 ausgeführt werden können, wenn das Computerprogramm auf einem Computer oder einer entsprechenden Recheneinheit, insbesondere unter Verwendung eines Systems nach Anspruch 7, ausgeführt wird.

**9.** Computerprogramm mit einem computerlesbaren Medium und auf dem computerlesbaren Medium gespeichertes Computerprogramm mit Programmcodemitteln, die geeignet sind, alle Schritte eines Verfahrens nach einem der Ansprüche 1 bis 6 auszuführen, wenn das Computerprogramm auf einem Computer oder einer entsprechenden Recheneinheit ausgeführt wird, insbesondere unter Verwendung eines Systems nach Anspruch 7.

**Revendications**

**1.** Procédé de prédiction d'un facteur d'orthogonalité basé sur un emplacement, le facteur d'orthogonalité représentant une perte d'orthogonalité de codes d'étalement transmis simultanément sur une liaison descendante UMTS, le procédé appliquant une différence entre une perte de trajet prédite et une perte de trajet d'espace libre pour une distance entre une station d'émetteur - récepteur de base et un équipement d'utilisateur, établissant une corrélation entre cette différence, désignée en tant que perte de trajet en excès, et le facteur d'orthogonalité, **caractérisé en ce que** le procédé utilise pour la prédiction du facteur d'orthogonalité des valeurs d'entrée qui sont dérivées de mesures HSDPA et de signal pilote simultanées et un mappage d'un indicateur de qualité de canal reporté sur un rapport de puissance de porteuse sur puissance d'interférence, dans lequel le rapport de puissance de porteuse sur puissance d'interférence est calculé conformément à la formule suivante :

$$\frac{C}{I} = \frac{P_{HS}}{(1-\alpha)P_{own} + P_{other} + P_{th}}$$

dans laquelle $P_{HS}$ est la puissance reçue pour desservir un utilisateur HSPDA respectif, $P_{own}$ est la puissance totale reçue en provenance d'une cellule de desserte respective, $P_{other}$ est une puissance totale reçue en provenance de toutes les autres cellules, $P_{th}$ est la puissance de bruit thermique et $\alpha$ est le facteur d'orthogonalité ; et le facteur d'orthogonalité est calculé par la formule :

$$\alpha = 1 - \frac{P_{HS}}{P_{own}}10^{-(0.1(CQI(L_{Ex})-18)0.98)} + \frac{P_{other} + P_{th}}{P_{own}}$$

dans laquelle une relation globale CQI ($L_{EX}$) entre un indicateur de qualité de canal CQI et une perte de trajet en excès $L_{EX}$ est dérivée de mesures appropriées de l'indicateur de qualité de canal en fonction de la perte de trajet en excès prenant en compte des propriétés et des caractéristiques de trajets de mesure individuels, et l'indicateur de qualité de canal est mappé sur le rapport de puissance de porteuse sur puissance d'interférence via une relation linéaire qui adapte une moyenne par segment d'une relation mesurée correspondante en utilisant un facteur d'orthogonalité constant.

2. Procédé selon la revendication 1, dans lequel la perte de trajet en excès est donnée par

$$L_{EX} = L_{rp} - L_{fs} \text{ en dB}$$

où $L_{EX}$ correspond à la perte de trajet en excès, $L_{rp}$ correspond à la perte de trajet prédite d'un trajet radio et $L_{fs}$ correspond à la perte de trajet d'espace libre.

3. Procédé selon l'une quelconque des revendications précédentes, dans lequel l'indicateur de qualité de canal est mesuré au niveau d'un utilisateur HSDPA respectif.

4. Procédé selon l'une quelconque des revendications précédentes dans lequel, afin d'exclure tout effet quelconque d'autre interférence de cellule trop élevée, on suppose que $P_{own} \geq P_{other} + P_{th}$.

5. Procédé selon l'une quelconque des revendications précédentes dans lequel $P_{HS}$ et $P_{own}$ sont définis relativement à une puissance reçue $E_c$ d'un canal de pilote commun principal pCPICH et $P_{other}$ est donné sous la forme Ec $(10^{(0,1nLEX)}-1)$, n étant l'inclinaison de $P_{other}$.

6. Procédé selon la revendication 5, dans lequel une syntonisation plus fine est exécutée en adaptant des quantiles inférieurs et supérieurs d'une distribution CQI prédite à ceux de la distribution CQI mesurée.

7. Système de mesure adapté à la prédiction d'un facteur d'orthogonalité basé sur un emplacement dans une liaison descendante UMTS à partir de mesures HSDPA selon l'une quelconque des revendications 1 à 6, le système comportant un scanner PN et une carte HSDPA comme utilisé par un opérateur de réseau pour des tests de lecteur, le scanner PN et la carte HSDPA étant prévus pour fonctionner simultanément, et le scanner PN étant en outre configuré pour mesurer la puissance reçue pCPICH jusqu'à 8 cellules par point de mesure qui peut être utilisée pour calculer le rapport de puissance de porteuse sur puissance d'interférence et la perte de trajet, et la carte HSPDA étant configurée pour reporter des données à partir desquelles l'indicateur de qualité de canal, un identifiant de cellule d'une cellule de desserte respective et un rapport $E_c/I_0$ de puissance pCPICH reçue sur une puissance d'interférence totale dans une bande de fréquences UMTS correspondante peuvent être extraits.

8. Programme informatique ayant des moyens de code de programme, à l'aide desquels toutes les étapes d'un procédé selon l'une quelconque des revendications 1 à 6 peuvent être mises en oeuvre lorsque le programme informatique est exécuté sur un ordinateur d'une unité de calcul correspondante, en particulier en utilisant un système selon la revendication 7.

9. Programme informatique ayant un support lisible par ordinateur et un programme informatique mémorisé dans le support lisible par ordinateur ayant des moyens de code de programme appropriés pour mettre en oeuvre toutes les étapes d'un procédé selon l'une des revendications 1 à 6, lorsque le programme informatique est exécuté sur un ordinateur d'une unité de calcul correspondante, en particulier en utilisant un système selon la revendication 7.

Figure 1

Figure 2

Figure 3

Figure 4

Figure 5

Figure 6

Figure 7

The right colum shows the sources of the corresponing data which are

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. ADACHI.** Effects of orthogonal spreading and Rake combining on DS-CDMA forward link in mobile radio. *IEICE Trans. commun.,* November 1997, vol. E80-B (11), 1703-1712
- **K. I. PEDERSEN ; P. E. MOGENSEN.** The Downlink Orthogonality Factors Influence on WCDMA Systems Performance. *IEEE Vehicular Technology Conf.,* 2002
- **C. PASSERINI ; G. FALCIASECCA.** Modelling of orthogonality factor using ray-tracing predictions. *IEEE Trans. Wireless Commun.,* November 2004, vol. 3, 2051-2059
- **N. B. MEHTA.** Macrocell-Wide Behaviour of the Orthogonality Factor in WCDMA Downlinks. *IEEE Trans. Wireless Commun.,* December 2006, vol. 5, 3394-3399
- **K. I. PEDERSEN ; P. E. MOGEN-SEN.** The Downlink Orthogonality Factors Influence on WCDMA Systems Performance. *IEEE Vehicular Technology Conf.,* 2002
- **S. BURGER ; H. BUDDENDICK ; G. WÖLFLE.** *Location Dependent CDMA Orthogonality in System Level Simulations*
- Distribution of orthogonality factor and multi-path gain of the UMTS downlink obtained by measurement based simulation. **H. DROSTE ; J. BEYER.** IEEE Vehicular Technology Conf. Spring, 2005
- **N. B. MEHTA et al.** Macrocell-Wide Behaviour of the Orthogonality Factor in WCDMA Downlinks. *IEEE Trans. Wireless Commun.,* December 2006, vol. 5, 3394-3399
- Channel Characterisation and HSDPA Bit Rate Prediction of a Dence City Network. **L. KLOCKAR.** IEEE Vehicular Technology Conf. Spring, 2009